# EUROPÄISCHE PATENTSCHRIFT

(11) **EP 1 828 651 B1**
(45) Veröffentlichungstag und Bekanntmachung des Hinweises auf die Patenterteilung: **16.02.2011**
(21) Anmeldenummer: 05804981.8
(22) Anmeldetag: 19.12.2005
(51) Int. Cl.: F16K 17/04, F16K 17/06, F16K 17/196

(54) **DRUCKBEGRENZUNGSVENTIL MIT REDUZIERTER DIFFERENZFLÄCHE**
PRESSURE LIMITING VALVE COMPRISING A REDUCED DIFFERENTIAL SURFACE
SOUPAPE DE LIMITATION DE PRESSION PRESENTANT UNE SURFACE DIFFERENTIELLE REDUITE

(30) Priorität: 22.12.2004 DE 102004061862
(43) Veröffentlichungstag der Anmeldung: 05.09.2007
(73) Patentinhaber: Bosch Rexroth AG, 70184 Stuttgart (DE)
(72) Erfinder: SCHNIEDERJAN, Reinhold, 89233 Neu-Ulm (DE); GEPRÄGS, Markus, 89075 Ulm (DE)
(74) Vertreter: Körfer, Thomas
(86) Internationale Anmeldenummer: PCT/EP2005/013678
(87) Internationale Veröffentlichungsnummer: WO 2006/069667

(56) Entgegenhaltungen:
- DE-A1- 19 631 625
- US-A- 4 217 927

## Beschreibung

Die Erfindung betrifft ein hydraulisches Druckbegrenzungsventil, welches eine verkleinerte Differenzmeßfläche zur Reduktion der Federkräfte aufweist.

Druckbegrenzungsventile und Schaltventile sind als Einzelkomponenten bereits in vielfältiger Ausbildung bekannt.

Aus der DE 196 31 625 A1 ist ein Druckbegrenzungsventil mit Einspeisefunktion gemäß dem Oberbegriff des Anspruchs 1 bekannt. Das Ventil umfaßt einen Ventilschließkörper, der eine Ventilschließfläche, welche zusammen mit einem der Ventilschließfläche gegenüberliegenden ersten Ventilsitz einen ersten Dichtsitz für die Einspeisefunktion bildet, und eine Ventilschließkörper-Öffnung aufweist, die von einem zweiten Ventilsitz umgeben ist, welche zusammen mit einem an einem axial beweglichen Ventilbolzen ausgebildeten Schließkopf einen zweiten Dichtsitz für die Druckbegrenzungsfunktion bildet. Aus diesem Zusammenhang ist der grundsätzliche Aufbau eines Druckbegrenzungsventils offenbart.

Nachteilig an bekannten direkt gesteuerten Druckbegrenzungsventilen ist insbesondere, daß bei größeren Volumenströmen die Querschnitte und damit auch die Meßflächen größer werden, wodurch auch die Druckfedern stärker und somit schwieriger zu handhaben sind.

Der Erfindung liegt daher die Aufgabe zugrunde, ein Druckbegrenzungsventil zu schaffen, das einerseits direkt gesteuert ist, aber andererseits mit einer Differenzmeßfläche versehen ist, um die Druckfederkräfte möglichst gering zu halten.

Die Aufgabe wird durch die kennzeichnenden Merkmale des Anspruchs 1 in Verbindung mit den gattungsbildenden Merkmalen gelöst.

Der Ventilbolzen weist eine Längsbohrung auf, welche dafür sorgt, daß die durch den Hochdruck beaufschlagte wirksame Fläche reduziert wird. Dadurch können die Vorteile eines direkt gesteuerten Ventils auch für große Volumenströme umgesetzt werden, da die Federn nicht so stark dimensioniert sein müssen, weil die Feder nurmehr die auf die Differenzfläche am Dichtsitz wirkenden Kräfte abfangen muß. Die Handhabung der Federn ist somit einfacher und wirkt sich günstig auf die Montage und den erforderlichen Bauraum aus.

Die Unteransprüche beinhalten vorteilhafte Weiterbildungen der Erfindung.

Die Erfindung wird nachfolgend anhand eines bevorzugten Ausführungsbeispiels unter Bezugnahme auf die Zeichnung näher beschrieben. In der Zeichnung zeigen:
- Fig. 1: eine schematische Schnittdarstellung eines Ausführungsbeispiels eines Druckbegrenzungsventils gemäß dem Stand der Technik,
- Fig. 2: eine schematische Darstellung der Verwendung zweier Druckbegrenzungsventile gemäß dem Stand der Technik in einem hydrostatischen Antrieb, und
- Fig. 3: eine schematische Schnittdarstellung eines erfindungsgemäßen Druckbegrenzungsventils in einem Schnitt entlang der Längsachse des Ventils.

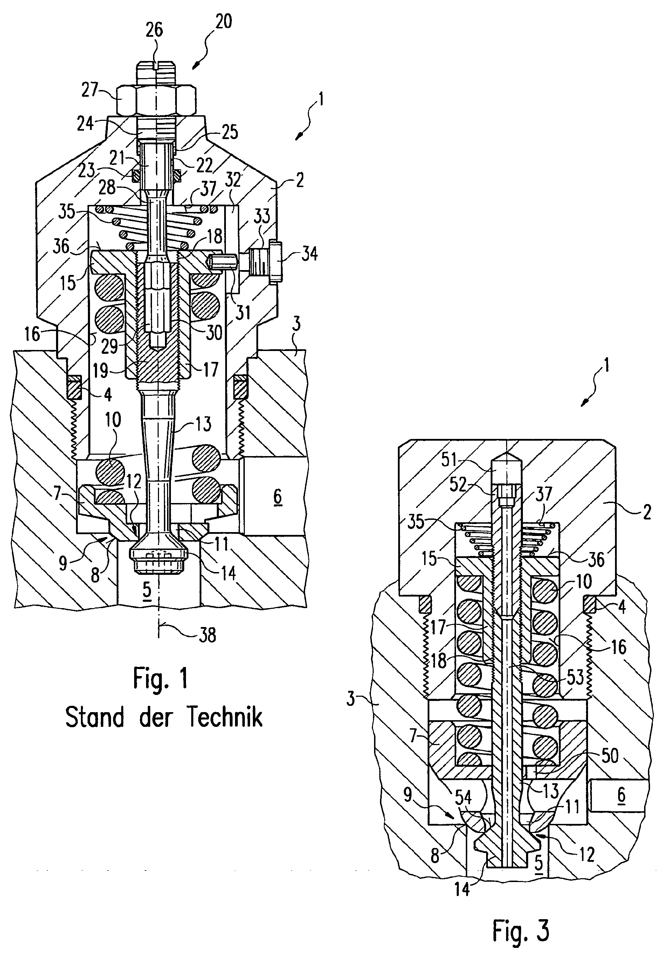

Fig. 1 zeigt zum besseren Verständnis der erfindungsgemäßen Maßnahmen ein Ausführungsbeispiel eines Hydraulikventils 1 mit kombinierter Druckbegrenzungs- und Einspeisefunktion gemäß dem Stand der Technik.

Das Hydraulikventil ist allgemein mit dem Bezugszeichen 1 bezeichnet. Ein Ventilgehäuse 2 ist in eine nur schematisch dargestellte Ventilaufnahme 3 eingesetzt bzw. eingeschraubt und mittels eines Dichtrings 4 abgedichtet. In der Ventilaufnahme 3 sind ein Einspeise-Anschluß 5 und ein Arbeitsleitungs-Anschluß 6 ausgebildet, die durch das Hydraulikventil 1 miteinander in Verbindung stehen.

An seinem dem Einspeise-Anschluß 5 zugewandten Ende weist das Hydraulikventil 1 einen Ventilschließkörper 7 auf, an dem eine im Ausführungsbeispiel kegelstumpfförmig ausgebildete Ventilschließfläche 8 ausgebildet ist. Die Ventilschließfläche 8 wirkt mit einem der Ventilschließfläche 8 gegenüberliegenden ersten Ventilsitz 9 zur Ausbildung eines ersten Dichtsitzes zusammen.

Der Ventilschließkörper 7 weist ferner eine Ventilschließkörper-Öffnung 11 auf, die außenseitig von einem zweiten Ventilsitz 12 umgeben ist. Der zweite Ventilsitz 12 wirkt mit einem an einem Ventilbolzen 13 vorgesehenen Schließkopf 14 zur Ausbildung eines zweiten Dichtsitzes zusammen. Im Ausführungsbeispiel erstreckt sich der Ventilbolzen 13 durch die Ventilkörper-Öffnung 11 hindurch, so dass diese von dem Schließkopf 14 außenseitig abgedichtet ist. An seinem dem Schließkopf 14 gegenüberliegenden Ende ist der Ventilbolzen 13 mit einem Federteller 15 verbunden. Eine erste Schließfeder 10 erstreckt sich zwischen dem Federteller 15 und dem Ventilschließkörper 7 so, dass die erste Schließfeder 10 zwischen dem Federteller 15 und dem Ventilschließkörper 7 eingespannt ist. Dadurch wird der Ventilbolzen 13 so vorgespannt, dass dessen Schließkopf 14 dichtend an dem die Ventilkörper-Öffnung 11 umgebenden zweiten Ventilsitz 12 anliegt. Der Ventilbolzen 13, die erste Schließfeder 10 und der Federteller 15 werden von einer Axialbohrung 16 des Ventilgehäuses 2 aufgenommen.

Der Federteller 15 weist einen axialen Schaft 17 auf, in welchem eine axiale Längsbohrung 18 zur Aufnahme eines Verbindungsabschnitts 19 des Ventilbolzens 13 ausgebildet ist. Der Verbindungsabschnitt 19 des Ventilbolzens 13 ist mit einem Außengewinde versehen, das in ein entsprechendes Innengewinde der axialen Längsbohrung 18 des Federtellers 15 eingreift. Die axiale Lage des Federtellers 15 gegenüber dem Verbindungsbolzen 13 ist daher durch Drehen des Ventilbolzens 13 gegenüber dem Federteller 15 veränderlich, wodurch die Vorspannung der ersten Schließfeder 10 einstellbar ist.

Zum Verändern der Vorspannung der ersten Schließfeder 10 weist das Hydraulikventil 1 eine von außen zugängliche Verstelleinrichtung 20 auf, die im Ausführungsbeispiel als Verstellbolzen 21 ausgebildet ist. Der Verstellbolzen 21 durchdringt eine axiale Bohrung 22 in dem Ventilgehäuse 2 und ist mittels eines Dichtrings 22 abgedichtet. Der Verstellbolzen 21 umfaßt einen Gewindeabschnitt 24 mit einem Außengewinde, das in einem Innengewinde 25 des Ventilgehäuses 2 geführt ist. Der Verstellbolzen 21 kann durch ein geeignetes Werkzeug, das z. B. an einem Schraubenschlitz 26 angreift, in Drehung versetzt werden, wobei die Drehstellung des Ventilbolzens 21 im Ausführungsbeispiel durch eine Kontermutter 27 gesichert ist.

An einem in die Axialbohrung 16 des Ventilgehäuses 2 hineinragenden Abschnitt 28 weist der Verstellbolzen 21 einen Zapfen 29 mit einem Mehrkant-Außenprofil auf. Der Zapfen 29 greift in eine axiale Ausnehmung 30 ein, die an dem dem Schließkopf 14 abgewandten Ende des Ventilbolzens 13 vorgesehen ist. Die Ausnehmung 30 weist ein Mehrkant-Innenprofil auf, das an das Mehrkant-Außenprofil des Zapfens 29 so angepaßt ist, dass durch das Zusammenwirken des Mehrkant-Außenprofils des Zapfens 29 mit dem Mehrkant-Innenprofil der Ausnehmung 30 eine kraftschlüssige Verbindung geschaffen wird, die das auf dem Verstellbolzen 21 ausgeübte Drehmoment auf den Ventilbolzen 13 überträgt. In bezüglich der Längsachse 38 des Hydraulikventils 1 axialer Richtung ist der Zapfen 29 jedoch in der Ausnehmung 30 frei beweglich, so dass sich der Ventilbolzen 13 bei der Betätigung des Hydraulikventils 1 in axialer Richtung frei bewegen kann. Als Mehrkant-Profil eignet sich z.B. ein Sechskant-Profil oder ein Torx-Profil (Warenzeichen).

Der Federteller 15 ist mittels einer Arretiereinrichtung fixiert, die im Ausführungsbeispiel aus einem von dem Federteller 15 radial abstehenden Stift 31, insbesondere einem Gewindestift, besteht, welcher in einer in dem Ventilgehäuse 2 ausgebildeten Nut 32 in axialer Richtung frei beweglich ist. Auf diese Weise wird verhindert, dass sich der Federteller 15 mitdreht, wenn auf den Ventilbolzen 13 über den Ventilbolzen 21 ein Drehmoment übertragen wird. Der Stift 31 kann über eine durch ein Verschlußelement 34 druckdicht verschließbare Gehäusebohrung 33 von außen zugänglich sein, um zu ermöglichen, dass der Stift 31 in den Federteller 15 nach dem Einsetzen des Federtellers 15 in das Ventilgehäuse 2 eingeführt, insbesondere eingeschraubt wird.

Da der Ventilbolzen 13 mit dem Federteller 15 wie bereits beschrieben über ein Gewinde verbunden ist, bewirkt ein Verdrehen des Ventilbolzens 13 mittels des Verstellbolzens 21 eine relative axiale Lageänderung des Federtellers 15 gegenüber dem Ventilbolzen 13. Auf diese Weise kann die Vorspannung der ersten Schießfeder 10 von außen über ein an der Verstelleinrichtung 20 angreifendes Werkzeug eingestellt werden.

Zwischen der dem Schließkopf 14 abgewandten Stirnfläche 36 des Federtellers 15 und der Stirnfläche 37 der axialen Längsbohrung 16 des Gehäuses 2 ist eine zweite Schließfeder 35 angeordnet, um eine Rückstellkraft auf eine Ventileinheit bestehend aus dem Ventilschließkörper 7, dem Ventilbolzen 13, dem Federteller 15 und der ersten Schließfeder 10 auszuüben.

Nachfolgend wird die Funktion des Hydraulikventils 1 beschrieben. Die gleiche Funktion kommt grundsätzlich auch dem in Fig. 3 der gestellten erfindungsgemäßen Druckbegrenzungsventil mit Einspeisefunktion zu.

Zur Beschreibung der Druckbegrenzungsfunktion wird davon ausgegangen, dass an dem Arbeitsleitungs-Anschluß 6 ein Arbeitsdruck ansteht, der wesentlich größer ist, als der an dem Einspeise-Anschluß 5 anstehende Speisedruck. Die Ventilschließfläche 8 des Ventilschließkörpers 7 liegt daher an dem Ventilsitz 9 dichtend an. Der Schließkopf 14 des Ventilbolzens 13 liegt an dem die Ventilschließkörper-Öffnung 11 umgebenden Ventilsitz 12 aufgrund der von der ersten Schließfeder 10 ausgeübten Vorspannung dichtend an, so dass das Hydraulikventil 1 unterhalb eines vorgebbaren Maximaldrucks geschlossen ist.

Der an dem Arbeitsleistungs-Anschluß 6 anstehende Hockdruck wirkt dabei über die Ventilschließkörper-Öffnung 11 auf den Schließkopf 14 ein, so dass der Ventilbolzen 13 von dem Hochdruck in Öffnungsrichtung beaufschlagt wird. Sobald diese in Öffnungsrichtung wirkende Kraftkomponente die von der ersten Schließfeder 10 in schließende Richtung auf den Federteller 15 und somit auf den Ventilbolzen 13 ausgeübte Gegenkraft überschreitet, hebt der Schließkopf 14 von dem zweiten Ventilsitz 12 ab und gibt die Ventilkörper-Öffnung 11 frei. Die an dem Arbeitsleitungs-Anschluß 6 angeschlossene Hochdruckleitung wird somit über das Hydraulikventil 1 zu der an dem Einspeise-Anschluß 5 angeschlossenen Speiseleitung hin entlastet, bis der in der Hochdruckleitung herrschende Hockdruck unter den die Öffnung des Hydraulikventils 1 bewirkenden Maximaldruck abfällt. Der die Öffnung des Hydraulikventils 1 bewirkende Maximaldruck ist von der Vorspannung der ersten Schließfeder 10 abhängig, welche wie vorstehend beschrieben über die Verstelleinrichtung 20 verstellbar ist.

Sofern an dem Arbeitsleitungs-Anschluß 6 die mit Niederdruck beaufschlagte Arbeitsleitung angeschlossen ist, arbeitet das Hydraulikventil 1 entsprechend seiner Einspeisefunktion als Rückschlagventil. Wenn der an dem Einspeise-Anschluß 5 anstehende Speisedruck größer ist als der Druck an dem Arbeitsleitungs-Anschluß 6, öffnet das Hydraulikventil 1, indem die Ventileinheit bestehend aus Ventilschließkörper 7, Ventilbolzen 13, Federteller 15 und erster Schließfeder 10 in axialer Richtung angehoben wird, so dass die Ventilschließfläche 8 des Ventilschließkörpers 7 von dem ersten Ventilsitz 8 abhebt und somit die Verbindung zwischen dem Einspeise-Anschluß 5 und dem Arbeitsleitungs-Anschluß 6 freigibt.

Zum Anheben der Einheit aus Ventilschließkörper 7, Ventilbolzen 13, Federteller 15 und erster Schließfeder 10 ist lediglich die relativ geringe von der zweiten Schließfeder 35 ausgeübte Rückstellkraft zu überwinden. Die von der zweiten Schließfeder 35 ausgeübte Rückstellkraft ist erheblich geringer als die von der ersten Schließfeder 10 ausgeübte Schließkraft, so dass das Hydraulikventil 1 in diesem Fall als Rückschlagventil arbeitet. Dadurch wird verhindert, dass Druckfluid aus der an den Arbeitsleitungs-Anschluß 6 angeschlossenen Arbeitsleitung in die an den Einspeise-Anschluß 5 angeschlossene Speiseleitung zurückfließt, wenn der Druck in der Arbeitsleitung den Druck in der Speiseleitung übersteigt.

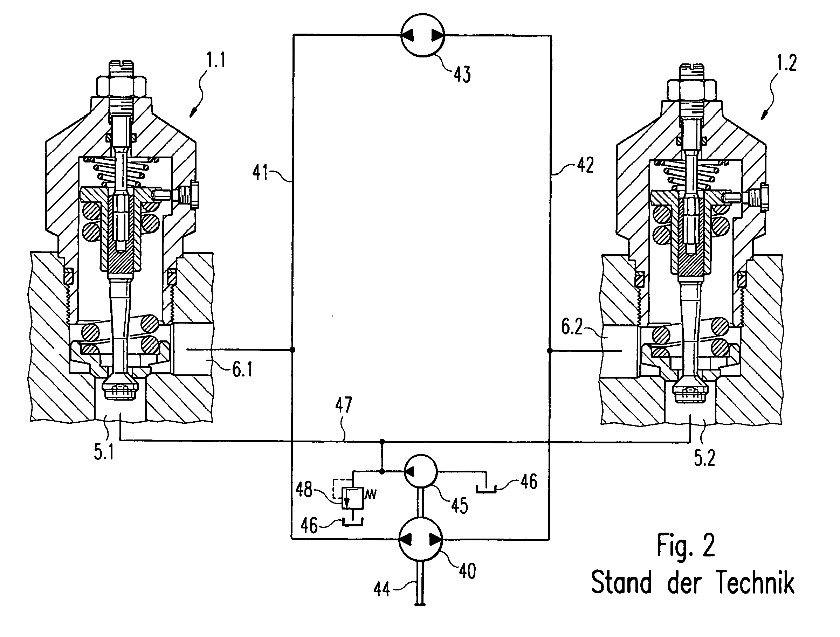

Zur besseren Verdeutlichung wird eine mögliche Verwendung des Hydraulikventils 1 bei einem hydrostatischen Antrieb anhand von Fig. 2 nachfolgend beschrieben. Die gleiche bevorzugte Verwendung besteht auch für das in Fig. 3 dargestellte erfindungsgemäße Druckbegrenzungsventil mit Einspeisefunktion.

Der hydrostatische Antrieb besteht aus einer Hydropumpe 40, die über eine erste Arbeitsleitung 41 und eine zweite Arbeitsleitung 42 mit einem Hydromotor 43 verbunden ist. Die Hydropumpe 40 kann über eine Antriebswelle 44 z. B. von einem nicht dargestellten Verbrennungsmotor angetrieben sein. Über die Antriebswelle 44 wird neben der Hydropumpe 40 auch eine Speisepumpe 45 angetrieben, die Druckfluid aus einem Druckfluid-Tank 46 ansaugt und in eine Speiseleitung 47 einspeist. Zur Druckbegrenzung der Speiseleitung 47 dient ein Druckbegrenzungsventil 48 herkömmlicher Bauart, das die Speiseleitung 47 mit dem Druckfluid-Tank 46 verbindet.

Zwischen der ersten Arbeitsleitung 41 und der Speiseleitung 47 ist ein erstes Hydraulikventil 1.1 angeordnet, während zwischen der zweiten Arbeitsleitung 42 und der Speiseleitung 47 ein zweites Hydraulikventil 1.2 angeordnet ist. Die in Fig. 2 dargestellten Hydraulikventile 1.1 und 1.2 sind entsprechend dem anhand von Fig. 1 bereits beschriebenen Ausführungsbeispiel ausgebildet.

Je nach Förderrichtung der Hydropumpe 40 ist eine der Arbeitsleitungen 41, 42 mit Hochdruck beaufschlagt, während die jeweils andere Arbeitsleitung 42, 41 mit Niederdruck beaufschlagt ist. Durch die Hydraulikventile 1.1 und 1.2 wird sichergestellt, dass die Einspeisung jeweils in die Niederdruck führende Arbeitsleitung 41 oder 42 erfolgt. Die Hydraulikventile 1.1 und 1.2 arbeiten dabei als Rückschlagventile, wobei das mit der Hockdruck führenden Arbeitsleitung 41 bzw. 42 verbundene Hydraulikventil 1.1 bzw. 1.2 sperrt, das jeweils andere Hydraulikventil 1.2 bzw. 1.1 öffnet. Während das mit der Niederdruckleitung verbundene Hydraulikventil 1.1 bzw. 1.2 die Einspeisefunktion übernimmt, übernimmt das jeweils andere Hydraulikventil 1.2 bzw. 1.1 eine Druckbegrenzungsfunktion, um den Druck in der Hockdruck führenden Arbeitsleitung 41 bzw. 42 auf einen durch die Verstelleinrichtung 20 vorgebbaren Maximaldruck zu begrenzen. Überschreitet der Druck in der Hockdruck führenden Arbeitsleitung 41 bzw. 42 diesen Maximaldruck, so entlastet das Hydraulikventil 1.1 bzw. 1.2 die Hockdruck führende Arbeitsleitung 41 bzw. 42 über die Speiseleitung 47 und das Druckbegrenzungsventil 48 zum Druckmitteltank 46 hin. Eine Überlastung der Arbeitsleitungen 41, 42 wird dadurch sicher verhindert.

Fig. 3 zeigt in einer schematischen Schnittdarstellung ein Ausführungsbeispiel eines erfindungsgemäß ausgestalteten Druckbegrenzungsventils 1. Das Druckbegrenzungsventil 1 kann dabei abgesehen von den erfindungsgemäßen Maßnahmen in ähnlicher Weise wie das in Fig. 1 und 2 dargestellte Hydraulikventil 1 gemäß dem Stand der Technik ausgebildet sein. Es wurden daher in Fig. 3 die gleichen Bezugszeichen wie in Fig. 1 für jeweils gleiche Teile verwendet, so daß sich insoweit eine wiederholende Beschreibung erübrigt.

Wie bereits weiter oben erläutert, liegt an dem Arbeitsleitungs-Anschluß 6 ein Druck an, der wesentlich größer ist als der an dem Einspeise-Anschluß 5 anstehende Speisedruck. Die Ventilschließfläche 8 des Ventilschließkörpers 7 liegt daher auch in dem in Fig. 3 dargestellten Ausführungsbeispiel eines erfindungsgemäß ausgestalteten Druckbegrenzungsventil 1 an dem Ventilsitz 9 dichtend an. Ebenso liegt der Schließkopf 14 des Ventilbolzens 13 dichtend an dem die Ventilschließkörper-Öffnung 11 umgebenden Ventilsitz 12 an, da er durch die Schließfeder 10 mit Vorspannung beaufschlagt ist. Der Hochdruck liegt dabei in der gesamten Längsbohrung 16 und über eine Bohrung 50 am Schließkopf 14 des Ventilbolzens 13 an, so daß der Ventilbolzen 13 von dem Hochdruck in Öffnungsrichtung beaufschlagt wird.

Der Ventilbolzen 13 ist dabei im Gegensatz zu dem in den Fig. 1 und 2 beschriebenen Ventil 1 gemäß dem Stand der Technik durch den Ventilschließkörper 7 geführt, da dieser den Ventilbolzen 13 eng umschließt. Der Druckausgleich erfolgt über die Bohrung 50 in dem Ventilschließkörper 7. Bedingt dadurch, daß der Federteller 15 nicht dichtend an der Innenwandung der Längsbohrung 16 anliegt, herrscht auch im Bereich der zweiten Schließfeder 35 Hochdruck.

Erfindungsgemäß weist das Druckbegrenzungsventil 1 in dem Gehäuse 2 eine Sackbohrung 51 auf, in welche sich ein Abschnitt 52 des Ventilbolzens 13 erstreckt. Der Abschnitt 52 des Ventilbolzens 13 kann entweder einstückig mit diesem ausgebildet sein oder aber ein separates Bauteil darstellen, wie in Fig. 3 gezeigt.

Weiterhin ist erfindungsgemäß der Ventilbolzen 13 über seine gesamte axiale Länge auch in dem Abschnitt 52 mit einer Längsbohrung 53 versehen, welche an beiden Endenoffen ist. Die Längsbohrung 53 mündet somit einerseits in die Sackbohrung 51 und andererseits in den Einspeise-Anschluß 5 aus.

Bedingt dadurch, daß an dem Einspeise-Anschluß 5 Niederdruck anliegt, welcher geringer als der in der Axialbohrung 16 anliegende Hochdruck ist, liegt in der Sackbohrung 51 über die Längsbohrung 53 ebenfalls Niederdruck an. Dies führt zu einer Verkleinerung der wirksamen Flächen, an denen Hochdruck anliegt, da die Stirnflächen 36 und 37 des Federtellers 15 und des Gehäuses 2 gegenüber einem massiven Ventilbolzen 13 verkleinert sind. Dadurch ist auch eine wirksame Fläche am Ventilsitz 12 um den Betrag des Durchmessers des Ventilbolzens 13 reduziert, so daß die Niederhaltekraft der ersten Schließfeder 10 ebenfalls reduziert werden kann. Der Schließkopf 14 wird somit nicht mehr vollflächig, sondern nurmehr über eine ringförmige Differenzfläche 54 belastet.

Dies führt dazu, daß die erste Schließfeder 10 bedingt durch eine geringere Federkonstante kleiner ausgelegt werden kann und leichter zu handhaben, insbesondere zu montieren ist. In der Folge vereinfachen sich die Einstellmöglichkeiten der Ventileinheit und es verringern sich Herstellungs- und Montagekosten. Durch die kleinere Auslegung der ersten Schließfeder 10 wird Bauraum eingespart und der Einsatz dieser Ventilbauart für große Volumenströme ermöglicht.

Die Erfindung ist nicht auf das dargestellte Ausführungsbeispiel beschränkt, sondern auch für andere Bauweisen von Ventilen 1 anwendbar. Alle Merkmale der Erfindung sind beliebig miteinander kombinierbar.

## Patentansprüche

1. Druckbegrenzungsventil mit einem Ventilschließkörper (7), der eine Ventilschließfläche (8), welche zusammen mit einem der Ventilschließfläche (8) gegenüberliegenden ersten Ventilsitz (9) einen ersten Dichtsitz bildet, und eine Ventilschließkörper-Öffnung (11) aufweist, die von einem zweiten Ventilsitz (12) umgeben ist, welcher zusammen mit einem an einem axial beweglichen Ventilbolzen (13) ausgebildeten Schließkopf (14) einen zweiten Dichtsitz bildet, mit einem mit dem Ventilbolzen (13) verbundenen und mit diesem zusammen axial beweglichen Federteller (15), mit einer zwischen dem Federteller (15) und dem Ventilschließkörper (7) eingespannten ersten Schließfeder (10), die den Ventilbolzen (13) gegen den an dem Ventilschließkörper (7) ausgebildeten zweiten Ventilsitz (12) vorspannt, und mit einer zweiten Schließfeder (35), die eine Ventileinheit (7, 13, 15, 10) gegen den ersten Ventilsitz (9) vorspannt,
**dadurch gekennzeichnet,**
**dass** in dem Ventilbolzen (13) über seine gesamte axiale Länge eine Längsbohrung (53) vorgesehen ist welche an beiden Enden offen ist, und
**dass** eine druckwirksame Stirnfläche des Schließkopfs (14) des Ventilbolzens (13) auf eine Differenzfläche (54) reduziert ist.

2. Druckbegrenzungsventil nach Anspruch 1,
**dadurch gekennzeichnet,**
**dass** die Längsbohrung (53) an einem durch den Schließkopf (14) gebildeten Ende sowie an einem gegenüberliegenden Ende des Ventilbolzens (13) offen ist.

3. Druckbegrenzungsventil nach Anspruch 1 oder 2,
**dadurch gekennzeichnet,**
**dass** in einer Axialbohrung (16) des Druckbegrenzungsventils (1) über einen Arbeitsleitungs-Anschluss (6) Hochdruck anliegt.

4. Druckbegrenzungsventil nach einem der Ansprüche 1 bis 3,
**dadurch gekennzeichnet,**
**dass** an dem Schließkopf (14) des Ventilbolzens (13) über einen Einspeise-Anschluss (5) Niederdruck anliegt.

5. Druckbegrenzungsventil nach einem der Ansprüche 1 bis 4,
**dadurch gekennzeichnet,**
**dass** in einem Gehäuse (2) des Druckbegrenzungsventils (1) eine Sackbohrung (51) ausgebildet ist.

6. Druckbegrenzungsventil nach Anspruch 5,
**dadurch gekennzeichnet,**
**dass** in der Sackbohrung (51) über die Längsbohrung (53) des Ventilbolzens (13) Niederdruck anliegt.

7. Druckbegrenzungsventil nach Anspruch 1
**dadurch gekennzeichnet,**
**dass** die Differenzfläche (54) ringförmig ist.

8. Druckbegrenzungsventil nach einem der Ansprüche 5 bis 7,
**dadurch gekennzeichnet,**
**daß** sich der Ventilbolzen (13) abschnittsweise in die Sackbohrung (51) des Gehäuses (2) erstreckt.

9. Druckbegrenzungsventil nach Anspruch 8,
**dadurch gekennzeichnet,**
**daß** der Ventilbolzen (13) in der Sackbohrung (51) geführt ist.

10. Druckbegrenzungsventil nach einem der Ansprüche 1 bis 9,
**dadurch gekennzeichnet,**
**daß** der Ventilbolzen (13) in dem Ventilschließkörper (7) geführt ist.

11. Druckbegrenzungsventil nach einem der Ansprüche 1 bis 10,
**dadurch gekennzeichnet,**
**daß** in dem Ventilschließkörper (7) eine Ausgleichsbohrung (50) ausgebildet ist.

## Claims

1. Pressure limiting valve with a valve closing body (7) which comprises a valve closing surface (8) which together with a first valve seat (9) opposing the valve closing surface (8) forms a first seal seat and a valve closing body orifice (11), which is surrounded by a second valve seat (12) which together with a closing head (14) configured on an axially displaceable valve bolt (13) forms a second seal seat and with a spring plate (15) which is connected to the valve bolt (13) and axially displaceable therewith, with a first return spring (10) clamped between the spring plate (15) and the valve closing body (7), which pretensions the valve bolt (13) against the second valve seat (12) configured on the valve closing body (7) and with a second return spring (35) which pretensions a valve unit (7, 13, 15, 10) against the first valve seat (9),
**characterised in that**
in the valve bolt (13) a longitudinal bore (53) is provided over the entire axial length thereof and which is open at both ends, and
**in that** a pressure-active front face of the closing head (14) of the valve bolt (13) is reduced to a differential area (54).

2. Pressure limiting valve according to claim 1,
**characterised in that**
the longitudinal bore (53) is open at an end formed by the closing head (14) and at an opposing end of the valve bolt (13).

3. Pressure limiting valve according to claim 1 or 2,
**characterised in that**
high pressure is applied in an axial bore (16) of the pressure limiting valve (1) via a working line connection (6).

4. Pressure limiting valve according to one of claims 1 to 3,
**characterised in that**
low pressure is applied to the closing head (14) of the valve bolt (13) via a feed connection (5).

5. Pressure limiting valve according to one of claims 1 to 4,
**characterised in that**
a blind bore (51) is configured in a housing (2) of the pressure limiting valve (1).

6. Pressure limiting valve according to claim 5,
**characterised in that**
low pressure is applied in the blind bore (51) via the longitudinal bore (53) of the valve bolt (13).

7. Pressure limiting valve according to claim 1,
**characterised in that**
the differential area (54) is annular.

8. Pressure limiting valve according to one of claims 5 to 7,
**characterised in that** the valve bolt (13) partially extends into the blind bore (51) of the housing (2).

9. Pressure limiting valve according to claim 8,
**characterised in that**
the valve bolt (13) is guided in the blind bore (51).

10. Pressure limiting valve according to one of claims 1 to 9,
**characterised in that**
the valve bolt (13) is guided in the valve closing body (7).

11. Pressure limiting valve according to one of claims 1 to 10,
**characterised in that**
a compensating bore (50) is configured in the valve closing body (7).

## Revendications

1. Soupape de limitation de pression comprenant un corps de fermeture de soupape (7) présentant une surface de fermeture de soupape (8), qui forme un premier siège d'étanchéité en commun avec un premier siège de soupape (9) opposé à la surface de fermeture de soupape (8), ainsi qu'une ouverture de corps de fermeture de soupape (11) entourée par un deuxième siège de soupape (12), qui forme un deuxième siège d'étanchéité avec une tête de fermeture (14) réalisée sur une tige de soupape (13) axialement mobile,
une coupelle de ressort (15) reliée à la tige de soupape (13) et axialement mobile avec celle-ci,
un premier ressort de fermeture (10) qui est enserré entre la coupelle de ressort (15) et le corps de fermeture de soupape (7), et qui assure la précontrainte de la tige de soupape (13) contre le deuxième siège de soupape (12) formé sur le corps de fermeture de soupape (7),
et un deuxième ressort de fermeture (35) qui assure la précontrainte d'une unité de soupape (7, 13, 15, 10) contre le premier siège de soupape (9),
**caractérisée**
**en ce que** dans la tige de soupape (13) est prévu, sur la totalité de sa longueur axiale, un alésage longitudinal (53), qui est ouvert aux deux extrémités, et
**en ce qu'**une surface frontale active à la pression de la tête de fermeture (14) de la tige de soupape (13), est réduite à une surface différentielle (54).

2. Soupape de limitation de pression selon la revendication 1,
**caractérisée**
**en ce que** l'alésage longitudinal (53) est ouvert à une extrémité formée par la tête de fermeture (14), ainsi qu'à une extrémité opposée de la tige de soupape (13).

3. Soupape de limitation de pression selon la revendication 1 ou la revendication 2,
**caractérisée**
**en ce que** dans un alésage axial (16) de la soupape de limitation de pression (1) est appliquée ou règne une haute pression, par l'intermédiaire d'un raccord de conduite de travail (6).

4. Soupape de limitation de pression selon l'une des revendications 1 à 3,
**caractérisée**
**en ce qu'**au niveau de la tête de fermeture (14) de la tige de soupape (13) est appliquée ou règne une basse pression, par l'intermédiaire d'un raccord d'alimentation (5).

5. Soupape de limitation de pression selon l'une des revendications 1 à 4,
**caractérisée**
**en ce que** dans un carter (2) de la soupape de limitation de pression (1) est formé un alésage borgne (51).

6. Soupape de limitation de pression selon la revendication 5,
**caractérisée**
**en ce que** dans l'alésage borgne (51) est appliquée ou règne la basse pression, par l'intermédiaire de l'alésage longitudinal (53) de la tige de soupape (13).

7. Soupape de limitation de pression selon la revendication 1,
**caractérisée**
**en ce que** la surface différentielle (54) est de forme annulaire.

8. Soupape de limitation de pression selon l'une des revendications 5 à 7,
**caractérisée**
**en ce que** la tige de soupape (13) s'étend en partie dans l'alésage borgne (51) du carter (2).

9. Soupape de limitation de pression selon la revendication 8,
**caractérisée**
**en ce que** la tige de soupape (13) est guidée dans l'alésage borgne (51).

10. Soupape de limitation de pression selon l'une des revendications 1 à 9,
**caractérisée**
**en ce que** la tige de soupape (13) est guidée dans le corps de fermeture de soupape (7).

11. Soupape de limitation de pression selon l'une des revendications 1 à 10,
**caractérisée**
**en ce que** dans le corps de fermeture de soupape (7) est réalisé un alésage ou perçage de compensation (50).
